Europäisches Patentamt

European Patent Office

Office européen des brevets

(19)

(11) Veröffentlichungsnummer : **0 052 092**
**B1**

(12) # EUROPÄISCHE PATENTSCHRIFT

(45) Veröffentlichungstag der Patentschrift :
**19.12.84**

(51) Int. Cl.³ : **B 23 K 20/04**

(21) Anmeldenummer : **81890170.4**

(22) Anmeldetag : **19.10.81**

(54) **Verfahren zur Herstellung von Maschinenhohlzylindern.**

(30) Priorität : **06.11.80 AT 5443/80**

(43) Veröffentlichungstag der Anmeldung :
**19.05.82 Patentblatt 82/20**

(45) Bekanntmachung des Hinweises auf die Patenterteilung : **19.12.84 Patentblatt 84/51**

(84) Benannte Vertragsstaaten :
**BE CH DE FR GB IT LI LU NL SE**

(56) Entgegenhaltungen :
**EP-A- 0 022 605**
**DE-A- 1 627 789**
**DE-A- 2 611 225**
**DE-B- 1 627 788**
**FR-A- 2 359 655**

(73) Patentinhaber : **VEREINIGTE EDELSTAHLWERKE AKTIENGESELLSCHAFT (VEW)**
**Elisabethstrasse 12**
**A-1010 Wien (AT)**

(72) Erfinder : **Kohnhauser, Alexander**
**Stubenberggasse 14**
**A-8605 Kapfenberg (AT)**

(74) Vertreter : **Widtmann, Georg, Dr.**
**Elisabethstrasse 12**
**A-1010 Wien (AT)**

EP 0 052 092 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von einem hohen Arbeitsdruck und starker Erosionswirkung unterworfenen Maschinenhohlzylindern insbesondere solchen für Kunststoffverarbeitungsmaschinen. Solche Maschinenteile sind durch die in der Größenordnung von 1 000-2 000 bar sich ergebenden Innendrücke, die oftmals hohe Korrosionsbeanspruchung und nicht zuletzt durch die im Rahmen der Kunststoffverarbeitung gebräuchlichen Füllstoffe einem sehr hohen Verschleiß unterworfen. Es hat sich gezeigt, daß gewisse Füllstoffe, wie z. B. Glasfasern, die Standzeiten dieser Teile bis auf 1/10 des ursprünglichen Wertes absenken können. Zumal bei Spritzgußmaschinen etwa 0,25 mm als maximal zulässiges Spiel zwischen Schnecke und Zylinder gelten, kann man ermessen, welche Bedeutung der Verschleißfaktor besitzt und es wurden demgemäß seitens der Maschinenhersteller schon große Anstrengungen zur Lösung dieses technischen Problems unternommen.

Aus der DE-A-16 27 788 wird es bekannt, rohrförmige Teile unterschiedlicher chemischer Zusammensetzung durch Schmieden miteinander zu verbinden.

Houdremont (Handbuch der Sonderstahlkunde 2. Band 1956, Seite 1346) empfiehlt die Verwendung von Nitrierstählen für Maschinenzylinder, also z. B. Extruderzylinder, Maschinengewehrläufe und dgl., die durch Nitrierung eine hohe Verschleißfestigkeit aufweisen sollen, wobei gleichzeitig eine erhöhte Dauerfestigkeit erwünscht wird. Die Aufbringung einer verschleißhemmenden Nitrierschicht auf der inneren Zylinderoberfläche kann bei bestimmten Fällen den Nachteil aufweisen, daß bei der Behandlung oftmals ein starker Verzug, bzw. eine Maßänderung eintritt und die dünne Nitrierschichte schon bei der mechanischen Fertigbearbeitung der Zylinder ungleichmäßig abgearbeitet wird. Da der Zylinderwerkstoff an sich eine relativ niedrige Abriebfestigkeit besitzt, schreitet der Verschleiß nach dem Abarbeiten dieser Schwachstellen außerordentlich rasch fort. Aus demselben Grund hat sich auch die Anwendung einsatzgehärteter Schichten nicht ausreichend bewährt.

Bei eigenem Versuch, Warmarbeitsstähle mit harten Oberflächenbeschichtungen etwa durch Borieren, Flammspritzen, oder durch das sogenannte CVD-Verfahren (chemical vapour deposition) zu versehen, sind die bekannten Schwierigkeiten, und zwar vor allem das Problem der Maßänderung aufgrund der erforderlichen hohen Beschichtungstemperatur und auch gegebenenfalls bei zu dicker Schicht ein Abplatzen der Hartschichten im Betrieb aufgetreten.

Eine interessante, wenngleich aufwendige Lösung stellt die Herstellung sogenannter « Bimetallzylinder » dar. Man versteht darunter solche, hauptsächlich für Maschinen mit größeren Schneckendurchmessern gebräuchliche Zylinder, bei denen auf den vorgefertigten Teil in 1,5 bis 4 mm hoher Schicht in einem hermetisch abgeschlossenen Ofen bei hohen, bis zur Abkühlung erforderlichen Drehzahlen speziell entwickelte Auftragslegierungen aufgeschmolzen werden (s. etwa im « Industrieanzeiger » Nr. 60 vom 20.7.1973, Seite 1403/4). Der betreffende Schleuderguß ist aber nicht einfach zu beherrschen und auch die Sprödigkeit der bimetallischen Schichten kann Probleme ergeben.

Es besteht demnach weiterhin das Bedürfnis nach der Schaffung kostengünstig herstellbarer Maschinenzylinder, welche die an sie gestellten Forderungen optimal erfüllen.

Die Erfindung löst diese Aufgabe und schlägt ein Herstellungsverfahren mit dem Kennzeichen vor, daß ein aus einem hochverschleißfesten, härtbaren und korrosionsbeständigen Stahlkern und einer Hülle aus Baustahl bestehender, vorzugsweise zylinderförmiger Rohling durch Schmieden oder Warmwalzen unter Ausbildung einer metallischen Bindung und einer Querschnittverminderung des Kernwerkstoffes um zumindest 20 % verformt und sodann durch Anbringung einer die Bearbeitungszugabe berücksichtigenden Bohrung der Hohlzylinder gebildet, die auf den Kernwerkstoff abgestellte Härtung durchgeführt und die Bearbeitung zur Erreichung des gewünschten Endmaßes vorgenommen wird.

Gemäß einer bevorzugten Ausführungsform des Verfahrens wird der Rohling aus einem Baustahlrohr und einem darin satt eingepaßten Stab aus dem Kernwerkstoff gebildet, der Fugenverlauf an den beiden Enden des Rohlings unmittelbar durch Anbringung einer Schweißnaht im Bereiche desselben oder mittelbar durch Anschweißen einer denselben abdeckenden Scheibe metallisch verschlossen und das Schmieden bzw. Warmwalzen unter Querschnittverminderung des Kernwerkstoffes um zumindest 40 % vorgenommen.

Als Werkstoff für den Kernwerkstoff kommen grundsätzlich alle schmiedbaren Legierungen in Betracht, welche die an sie gestellten Anforderungen erfüllen.

Besonders bevorzugt wird jedoch als Kernwerkstoff eine schmiedbare Stahllegierung aus der Gruppe der Ledeburitischen Chromstähle mit mindestens 11 % Cr oder der nicht rostenden härtbaren Chromstähle mit mindestens 14 % Cr verwendet.

Es versteht sich von selbst, daß darunter auch durch Zusatz eines oder mehrerer weiterer Legierungselemente gebildete Modifikationen dieser genannten Legierungstypen zu verstehen sind, wobei als Zusatzelemente für die ledeburitischen Cr-Stähle insbesondere Mo, V, W und Co bis insgesamt etwa 12 % und für die nicht rostenden Cr-Stähle insbesondere Mo, Ni, V, W, Co, Ti, Nb bis insgesamt etwa 6 % zu nennen sind.

Das erfindungsgemäße Verfahren wird nun an Hand von Ausführungsbeispielen näher erläutert.

Beispiel 1

Ein Maschinenhohlzylinder für die Kunststoffverarbeitung wurde hergestellt, indem ein zylindrischer Kernwerkstoff aus dem ledeburitischen Cr-Stahl der Werkstoff-Nr. 1.2379 (X 155 Cr V Mo 121) satt dichtend in ein Baustahlrohr aus dem Werkstoff-Nr. 1.7131 (16 Mn Cr 5) eingepreßt und beide Stirnenden des einen äußeren Durchmesser von 170 mm (bei einem Kerndurchmesser von 75 mm) und 500 mm Länge aufweisenden Rohlings durch kreisförmiges Anschweißen je einer runden Platte im Bereich des Randwerkstoffes gegenüber der Atmosphäre verschlossen wurden. Dieser Rohling wurde sodann auf die Schmiedetemperatur (1 150 °C) gebracht und auf einer Langschmiedemaschine aus der Schmiedehitze auf etwa die doppelte Länge verformt, wobei sich ein Außendurchmesser des Werkstückes von 110 mm und ein Kerndurchmesser von 52 mm ergab. Durch diese Schmiedung wurde eine völlig einwandfreie metallische Bindung von Kern- und Randwerkstoff über den gesamten Umfang erreicht, was sich aus Schliffbildern ergibt, die durch scheibenförmiges Aufteilen eines gleichartigen analog hergestellten Probekörpers erhalten wurden.

Es zeigen :

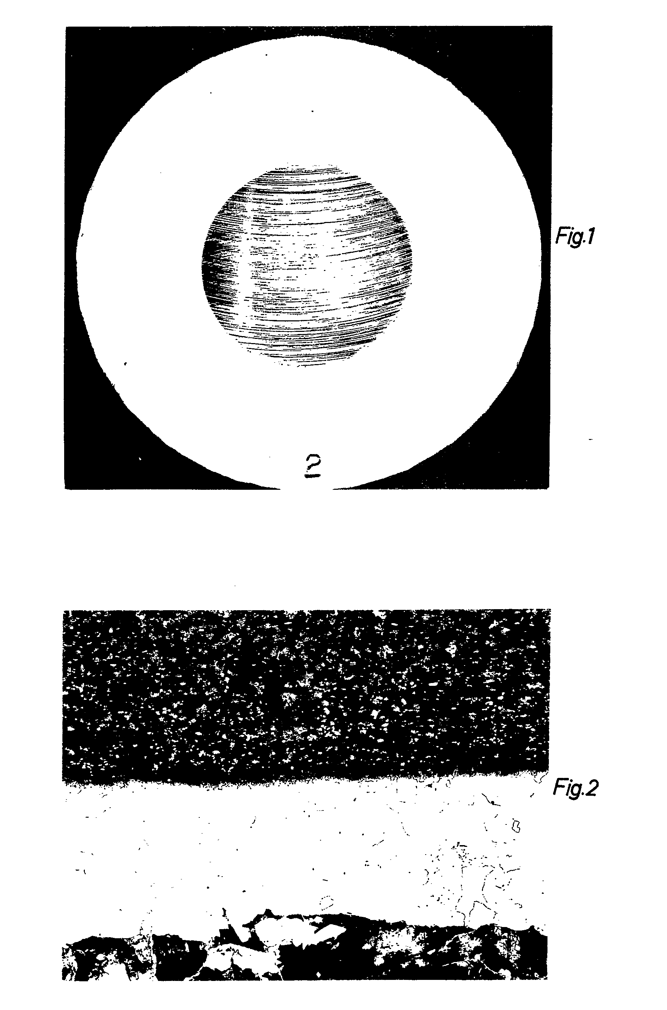

Figur 1  die Heißätzscheibe einer (mit 2 bezeichneten) Scheibenprobe, die dem Probenkörper quer zum Achsenverlauf etwa im Bereich des ersten Drittels seiner Länge nach dem Schmieden und darauffolgenden Weichglühen entnommen wurde ;

Figur 2  das Mikrogefüge (100 : 1) der axial geschnittenen Probe Nr. 2 im Grenzbereich von Kern- und Randwerkstoff ;

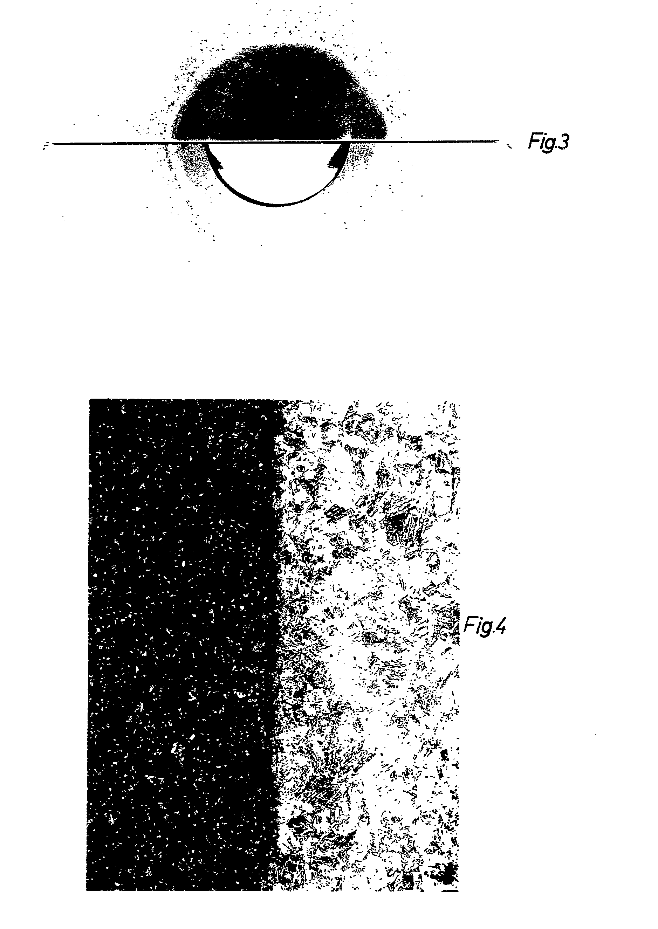

Figur 3  das Makrogefüge einer weiteren Probe, die dem Probenkörper an einer anderen Stelle (analog zu Fig. 1) entnommen, zum Teil mit der gewünschten Kernbohrung versehen und der entsprechenden Wärmebehandlung (gehärtet und angelassen) unterzogen wurde und

Figur 4  das Mikrogefüge (100 : 1) der Fig. 3 entsprechenden und axial geschnittenen Probenscheibe ebenfalls im Grenzbereich von Kern- und Randwerkstoff.

(Gleichartige Ergebnisse wurden bei allen über die Gesamtlänge aus dem Probenkörper entnommenen Scheibenproben erhalten).

Nach dem Weichglühen und Richten des Werkstückes wurde eine zentrale Bohrung von 34 mm (± 0,3 mm) angebracht und die Wärmebehandlung zur Erreichung einer Härte bzw. Festigkeit des Kernwerkstoffes von 59-61 HRc und des Randwerkstoffes von 920 N/mm² vorgenommen.

Der in üblicher Weise (Schleifen bzw. Honen auf das Endmaß) fertiggestellte Maschinenhohlzylinder erbrachte beim Einsatz eine mehr als dreifache Standzeit gegenüber einem aus Nitrierstahl gefertigten solchen Zylinder und konnte überdies nach dem Aufbohren auf eine für eine Schnecke von etwas größerem Durchmesser passende lichte Weite als neuwertiger Maschinenteil weiterverwendet werden.

Beispiel 2

Im Zentrum einer schwach konisch ausgebildeten Gußkokille wurde ein der Konizität bzw. der Wandungsform nachgebildeter Kern aus dem rostfreien Chromstahl der Werkstoff-Nr. 1.4528 (X 105 Cr Co Mo 182) eingesetzt und mit der Bodenplatte fixiert. Überdies wurde auf die obere Stirnfläche des Kernwerkstoffes eine Beschwerung aufgesetzt, um einen sicheren Lageverbleib des Kernes während des Gusses zu gewährleisten. Im steigenden Guß wurde dieser Kern mit einer gleichförmigen Schicht einer Baustahlschmelze aus dem Stahl Werkstoff-Nr. 1.7218 (25 Cr Mo 4) umgegossen. Der auf diese Weise gebildete Verbundstahlblock wurde noch im warmen Zustand zum Walzwerk überstellt und durch Warmwalzen ein Rohling hergestellt, dessen gleichmäßige metallische Bindung überprüft und nachgewiesen wurde.

Aus dem Rohling wurde in der schon im Beispiel 1 beschriebenen Art und Weise ein Maschinenhohlzylinder hergestellt, der sich im Einsatz bei der Kunststoffverarbeitung ebenfalls hervorragend bewährt hat.

**Ansprüche**

1. Verfahren zur Herstellung von einem hohen Arbeitsdruck und starker Erosionswirkung unterworfenen Maschinenhohlzylindern, insbesondere solchen für Kunststoffverarbeitungsmaschinen, dadurch gekennzeichnet, daß ein aus einem hochverschleißfesten, härtbaren und korrosionsbeständigen Stahlkern und einer Hülle aus Baustahl bestehender, vorzugsweise zylinderförmiger Rohling durch Schmieden oder Warmwalzen unter Ausbildung einer metallischen Bindung zwischen Kern und Hülle und einer Querschnittverminderung des Kernwerkstoffes um zumindest 20 % verformt und sodann durch Anbringen einer die Bearbeitungszugabe berücksichtigenden Bohrung der Hohlzylinder gebildet, die auf den Kernwerkstoff abgestellte Härtung durchgeführt und die Bearbeitung zur Erreichung des gewünschten Endmaßes vorgenommen wird.

2. Verfahren nach Anspruch 1, dadurch gekennzeichnet, daß der Rohling aus einem Baustahlrohr und einem darin satt eingepaßten Stab aus dem Kernwerkstoff gebildet, der Fugenverlauf an den beiden Enden des Rohlings unmittelbar durch Anbringung einer Schweißnaht im Bereiche desselben oder mittelbar durch Anschweißen einer denselben abdeckenden Scheibe metallisch verschlossen und das Schmieden bzw. Warmwalzen unter Querschnittverminderung des Kernwerkstoffes um zumindest 40 % vorgenommen wird.

3. Verfahren nach den Ansprüchen 1 und 2, dadurch gekennzeichnet, daß als Kernwerkstoff eine schmiedbare Stahllegierung aus der Gruppe der ledeburitischen Chromstähle mit mindestens 11 % Cr oder der nicht rostenden härtbaren Chromstähle mit mindestens 14 % Cr verwendet wird.

### Claims

1. A method of manufacturing hollow cylinders for machines, which are subjected to a high working pressure and a great erosion effect, in particular those for plastics processing machines, characterized in that a preferably cylindrical blank, consisting of a highly wear-resistant, hardenable and corrosion-resistant steel core and a sleeve made of structural steel, is deformed by at least 20 % by forging or hot rolling, forming a metal bond between the core and the sleeve and a decrease in cross-section of the core material and then, by providing a bore, which takes account of the machining allowance, the hollow cylinder is formed, the core material is hardened and the machining for obtaining the desired final dimension is undertaken.

2. A method according to claim 1, characterized in that the blank is formed by a structural steel pipe and a bar, made of the core material, fitted snugly therein, the course of the joint is sealed by metallic means at the two ends of the blank directly by fitting a welding seam in the region of the latter or indirectly by welding on a plate, covering the blank, and the forging or hot rolling is carried out, decreasing the cross-section of the core material by at least 40 %.

3. A method according to claims 1 and 2, characterized in that a forgeable steel alloy of the class of the ledeburitic chrome steels with at least 11 % Cr or of the stainless hardenable chrome steels with at least 14 % Cr is used as the core material.

### Revendications

1. Procédé de fabrication de cylindres creux pour machine soumis à une pression de travail élevée et à un fort effet d'érosion, en particulier de cylindres pour machines de transformation de matières plastiques, caractérisé en ce qu'une ébauche de préférence cylindrique constituée par un noyau d'acier de haute résistance à l'usure, durcissable et résistant à la corrosion et par une chemise en acier de construction est déformé par forgeage ou par laminage à chaud, en développant une liaison métallique et en subissant une diminution de section transversale d'au moins 20 %, puis le cylindre creux est formé en réalisant un alésage qui tient compte de la surépaisseur pour l'usinage, la trempe adaptée au matériau du noyau est effectuée et l'usinage destiné à obtenir la cote finale souhaitée est réalisé.

2. Procédé selon la revendication 1, caractérisé en ce que l'ébauche est formée par un tube d'acier de construction dans lequel est forcée de façon hermétique une barre du matériau de noyau, les joints d'emboîture aux deux extrémités de l'ébauche sont obturés directement par l'application d'un cordon de soudure dans cette zone ou indirectement par soudage d'un disque qui la recouvre, et il est procédé au forgeage et au laminage à chaud de façon à obtenir une diminution de section du matériau de noyau d'au moins 40 %.

3. Procédé selon la revendication 1 ou 2, caractérisé en ce qu'on utilise comme matériau pour le noyau un acier allié forgeable du groupe des aciers au chrome ledeburitiques avec au moins 11 % de chrome, ou des aciers au chrome durcissables inoxydables avec au moins 14 % de chrome.

Fig.1

Fig.2

Fig.3

Fig.4